# FASCICULE DE BREVET EUROPEEN

(11) **EP 1 177 611 B1**
(45) Date de publication et mention de la délivrance du brevet: **26.10.2011**
(21) Numéro de dépôt: 01913973.2
(22) Date de dépôt: 09.03.2001
(51) Int. Cl.: H02K 19/36, H02K 29/08, F02N 11/04, H02K 5/167

(54) **MACHINE ELECTRIQUE TOURNANTE POLYPHASEE**
MEHRPHASIGE ROTIERENDE ELEKTRISCHE MASCHINE
POLYPHASE ELECTRIC ROTARY MACHINE

(30) Priorité: 10.03.2000 FR 0003131
(43) Date de publication de la demande: 06.02.2002
(73) Titulaire: VALEO EQUIPEMENTS ELECTRIQUES MOTEUR, 94017 Créteil (FR)
(72) Inventeur: ABADIA, Roger, F-93360 Neuilly-Plaisance (FR); DUBUS, Jean-Marc, F-94380 Bonneuil/Marne (FR); MASRIERA, Serge, F-78000 Versailles (FR)
(74) Mandataire: Gamonal, Didier
(86) Numéro de dépôt international: PCT/FR2001/000709
(87) Numéro de publication internationale: WO 2001/069762

(56) Documents cités:
- EP-A- 0 610 767
- US-A- 4 430 603
- US-A- 4 894 553
- US-A- 4 952 830
- US-A- 5 103 127
- US-A- 5 552 988
- PATENT ABSTRACTS OF JAPAN vol. 1997, no. 07, 31 juillet 1997 (1997-07-31) -& JP 09 065620 A (DENSO CORP), 7 mars 1997 (1997-03-07)
- PATENT ABSTRACTS OF JAPAN vol. 010, no. 125 (E-402), 10 mai 1986 (1986-05-10) -& JP 60 257754 A (MATSUSHITA DENKI SANGYO KK), 19 décembre 1985 (1985-12-19)
- PATENT ABSTRACTS OF JAPAN vol. 014, no. 479 (E-0992), 18 octobre 1990 (1990-10-18) & JP 02 197245 A (MATSUSHITA ELECTRIC WORKS LTD), 3 août 1990 (1990-08-03)
- PATENT ABSTRACTS OF JAPAN vol. 010, no. 356 (E-459), 29 novembre 1986 (1986-11-29) -& JP 61 154463 A (MAZDA MOTOR CORP), 14 juillet 1986 (1986-07-14)

## Description

La présente invention concerne une machine électrique tournante polyphasée apte à être utilisée dans un véhicule automobile à moteur à combustion interne, d'une part, comme générateur électrique pour réaliser une fonction d'alternateur et, d'autre part, comme moteur électrique pour réaliser notamment une fonction de démarrage du moteur à combustion interne du véhicule.

Une telle machine, du type réversible, permet de transformer de l'énergie mécanique en énergie électrique et vice versa et comporte un stator polyphasé entourant un rotor.

Cette machine électrique tournante est appelée usuellement «Alterno-démarreur».

La nature polyphasée nécessite un suivi de la position angulaire du rotor à l'aide de moyens de suivi pour la commande en mode moteur électrique afin d'injecter au bon moment du courant électrique dans l'enroulement de phase concerné du bobinage du stator comme décrit par exemple dans le document FR-B-2 745 444 et EP-A-0 260 176. Ces moyens de suivi sont du type magnétique.

Dans le document JP 60-257754 la machine électrique tournante est un moteur électrique et les moyens de suivi de la rotation du rotor sont implantés axialement entre le rotor et l'un des paliers du support. La solution est encombrante.

Dans le document JP 9-65620 la machine électrique tournante est réversible et les moyens de suivi de la rotation du rotor sont implantés à l'extrémité arrière de l'arbre du rotor. La solution est également encombrante.

Pour ce suivi on peut utiliser un roulement à billes instrumenté.

Une telle solution est coûteuse et peut s'avérer rédhibitoire en considérant l'encombrement de la machine électrique tournante.

Néanmoins elle est avantageuse car elle permet de pouvoir effectuer un suivi de la position angulaire du rotor pour des vitesses de rotation élevées.

C'est donc un but de l'invention de proposer une machine électrique tournante polyphasée apte à être utilisée comme générateur électrique et comme moteur électrique de démarreur et qui comporte des moyens peu encombrants, économiques et efficaces à vitesses de rotation élevées du rotor pour le suivi de la rotation du rotor de ladite machine.

Suivant l'invention Ce but est atteint par les caractéristiques de la revendication 1.

Dans une forme de réalisation la cible est une cible magnétique et comporte avantageusement un nombre de paires de pôles magnétiques identique à celui du rotor de la machine électrique, tandis que face à cette cible sont fixés sur le palier concerné de préférence trois capteurs à effet Hall ou magnéto-résistifs pour un meilleur suivi, les capteurs étant du type magnétique.

Ces capteurs sont dans une forme de réalisation du type à seuil adaptés à prendra deux valeurs comme décrit dans le document EP-A-0 260 176.

Le porte-cible peut être de nature magnétique ou amagnétique. La nature du matériau constituant la cible peut être des ferrites, des terres rares ou ne comporter que des secteurs inertes en tôle magnétique fluxés par le champ magnétique rotorique. La cible peut être crénelée.

D'une manière générale les moyens de suivi sont réglés de façon à optimiser le couple de démarrage et permettent de réaliser selon l'invention un suivi de la rotation du rotor pour des vitesses élevées de celui-ci.

Grâce à l'invention on obtient une solution qui tout en étant performante est économique car elle fait appel à des composants standards d'un alternateur classique produit en grande série.

Cette solution permet d'intégrer les moyens pour le suivi de la rotation du rotor dans l'encombrement d'un alternateur standard sans faire appel à un roulement à billes instrumenté.

En outre la cible est protégée puisqu'elle est positionnée entre les faces latérales en vis-à-vis du rotor et de l'un des paliers avant et arrière sans contact avec ledit palier.

Avantageusement le palier concerné est le palier arrière car le moyen de palier, en forme d'un roulement à billes dans le cas d'un alternateur classique, a une plus petite taille en sorte que le porte-cible, conformé pour ne pas interférer avec la bague non tournante du roulement à billes, aura la plus petite taille possible. En outre les liaisons électriques et les connexions sont plus faciles à installer.

De plus un capot arrière est monté sur le palier arrière, notamment pour protéger le porte-balais, en sorte que lesdits moyens de suivi sont mieux protégés et plus faciles à implanter.

Selon une caractéristique de la revendication 1, le ou les capteurs sont montés sur un porte-capteur réglable ou fixe angulairement implanté du côté de la face du palier avant ou arrière concerné, tournée à l'opposé du rotor.

Par exemple pour une machine électrique du type triphasée, on peut faire appel à trois capteurs comme décrit dans le document EP-0260 176.

De préférence le porte-capteurs est réglable circonférentiellement car il est monté sur le palier concerné, tandis que la cible et le porte-cible sont montés sur l'ensemble arbre-rotor. On peut donc réaliser les deux sous-ensembles et assembler le tout en final avec un réglage pour s'affranchir des tolérances de fabrication.

Cette disposition permet de ne pas augmenter l'encombrement axial entre les faces latérales en vis-à-vis du rotor et du palier avant ou arrière concerné.

Le ou les capteurs localement traversent le palier concerné à la faveur d'au moins une ouverture que présente de nanière classique celui-ci. Cette ou ces ouvertures constituent des entrées d'air ce qui permet d'assurer un nettoyage du ou des entrefers entre la cible et le ou les parties actives de ou des capteurs.

Cette ou ces parties actives sont en outre protégées.

De plus cela rend possible des lectures axiales en sorte qu'en variante le ou les capteurs ne traversent pas forcément la ou lesdites ouvertures mais pénètrent au moins dans celles-ci.

Dans tous les cas la cible est bien refroidie. Ce refroidissement est en outre accentué par le ou les ventilateurs que porte le rotor.

Bien entendu en variante le ou les paliers peuvent être également refroidis par eau ce qui favorise encore un abaissement de la température, le ou les ventilateurs étant alors à action axiale.

D'une manière générale les moyens de suivi du type magnétique selon l'invention supportent des températures plus élevées que des moyens de suivi à lecture optique. Ces moyens sont plus fiables et ne risquent pas de s'encrasser contrairement à des moyens de suivi à lecture optique.

A cette machine est associé un module électronique de commande et de contrôle comme décrit par exemple dans les documents FR-B-2 745 444 et EP-A-0 260 176 précités.

Ce module comporte un convertisseur de courant alternatif en courant continu ainsi que des moyens de commande recevant des informations des moyens de suivi et des moyens de régulation.

Ce module est implanté dans un mode de réalisation à l'extérieur de la machine. En variante il est implanté sur le support à la périphérie externe de celui-ci notamment quand le support est refroidi par eau.

Tout cela libère de la place au niveau du palier arrière qui est ainsi mieux refroidi en sorte que les moyens de suivi sont encore ménagés.

Dans une forme de réalisation le porte-cible est lié en rotation au rotor par coopération de formes.

Pour ne pas modifier le rotor et rendre ainsi plus économique la solution, le porte-cible est lié par coopération de formes à la partie centrale du ventilateur fixé sur le rotor.

Le porte-cible présente par exemple des ergots engagés chacun de manière complémentaire dans des évidements, par exemple en forme d'échancrures, réalisés dans la partie centrale annulaire du ventilateur. Le porte-cible entoure les liaisons filaires du bobinage d'excitation du rotor aux pistes collectrices en forme de bague portées par l'extrémité arrière de l'arbre du rotor.

Le porte-cible est donc de forme creuse. Ce porte-cible présente un rebord interne en forme de douille adapté à venir en appui sur la bague interne du roulement à billes du palier avant ou arrière concerné.

Ainsi le porte-cible est calé axialement à jeu de montage entre le roulement et le rotor tout en étant lié en rotation de manière directe ou indirecte au rotor par coopération de formes.

Le montage du porte-cible est ainsi aisé, celui-ci ne pouvant interférer avec le palier concerné du fait de son calage axial. Ce porte-cible est une pièce d'adaptation occupant au mieux l'espace disponible.

Le porte-cible entoure en partie la bague externe du roulement à billes du palier concerné ainsi que la douille que présente ledit palier pour montage de la bague externe du roulement à billes.

Dans une forme de réalisation cette douille, avantageusement usinée intérieurement, sert de centreur au porte-capteurs en sorte qu'un entrefer précis existe entre le porte-capteurs et la cible.

On obtient ainsi une bonne précision de lecture et de bonnes transmissions d'information au module électronique de commande et de contrôle.

Aucune interférence ne peut ainsi avoir lieu avec le palier concerné. En outre on occupe au mieux l'espace disponible sans augmenter l'encombrement de la machine.

Ainsi qu'il ressort à l'évidence de la description le porte-cible a avantageusement une forme annulaire et il en est de même de la cible.

Le porte-cible peut être obtenu par emboutissage d'une tôle en sorte qu'il peut être en matière magnétique ou magnétisable.

En variante le porte-cible est une pièce moulée en matière plastique en sorte qu'il est en matière non magnétique.

En variante le porte-cible est bi-matière et comporte une partie en matière plastique calée axialement sur l'arbre du rotor et portant une pièce métallique supportant la cible magnétique. En variante le porte-cible est d'un seul tenant avec le ventilateur ce qui permet de diminuer le nombre de pièces et de conserver le maximum de pièces d'un alternateur classique.

Ce porte-cible remplace l'entretoise prévue entre le roulement du palier concerné et le rotor. On utilise les échancrures d'indexation des ventilateurs du rotor pour caler en rotation le porte-cible.

Dans une forme de réalisation le palier arrière, que comporte la machine, présente des plots avec chacun au moins une saillie creuse pénétrant dans une ouverture du porte-capteurs, ou de tout autre support d'un composant, pour retenir un organe de fixation dudit composant en vue d'un montage automatique des organes de fixation.

La description qui va suivre illustre l'invention en regard des dessins annexés dans lesquels :
- la figure 1 est une vue en coupe axiale d'un alterno-démarreur pour véhicule automobile selon l'invention, le rotor n'étant pas coupé ainsi que la cible et le porte-cible selon l'invention ;
- la figure 2 est une vue selon la flèche 2 de la figure 1 sans le capot ;
- la figure 3 est une vue partiellement coupée pour montrer le bobinage d'excitation de l'ensemble rotor-arbre ;
- la figure 4 est une vue selon la flèche de la figure 3 ;

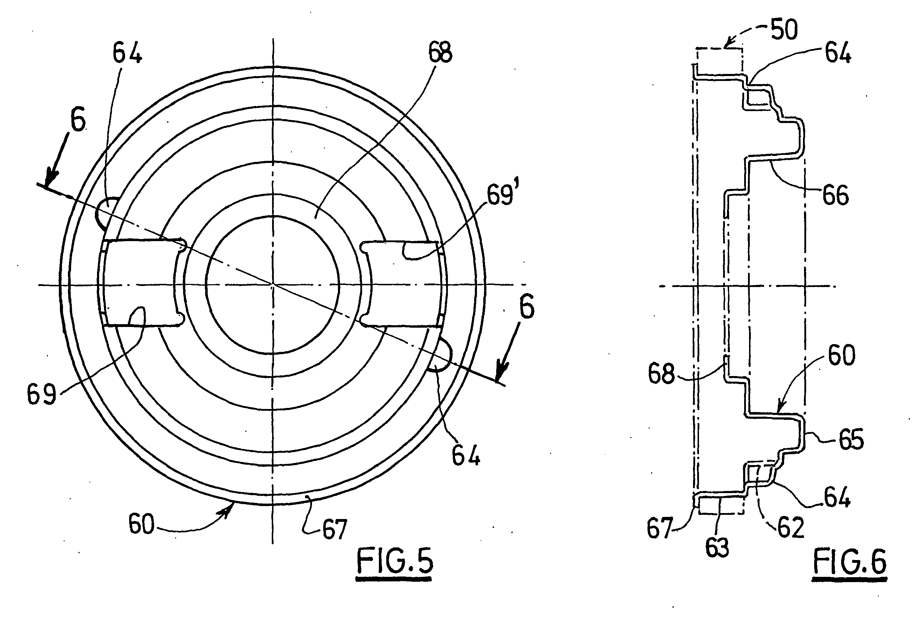

- la figure 5 est une vue de face du porte-cible ;
- la figure 6 est une vue en coupe selon la ligne 6-6 de la figure 5 ;
- la figure 7 est une vue analogue à la figure 1 pour encore un autre exemple de réalisation, le rotor étant représenté par son contour ;
- la figure 8 est une vue de la face arrière de la machine de la figure 7 sans le capot de protection pour mieux montrer les pièces portées par le palier arrrière ;
- la figure 9 est une vue en perspective du porte-capteurs des figures 7 et 8 ;
- la figure 10 est une vue de la face avant du palier arrière sans le stator ;
- la figure 11 est une vue à plus grande échelle de l'encart de la figure 10 ;
- la figure 12 est une vue partielle en coupe axiale de la partie arrière de la machine montrant une variante de réalisation du porte-cible ;
- la figure 13 est une vue de face de la face arrière du palier arrière de la figure 7 ;
- la figure 14 est une vue en coupe axiale d'un des plots du palier arrière portant le porte-capteurs.

La machine électrique tournante, représentée dans les figures, est réversible et est adaptée à transformer de l'énergie mécanique en énergie électrique et vice versa.

Cette machine consiste en un alterno-démarreur pour véhicule automobile à moteur à combustion interne.

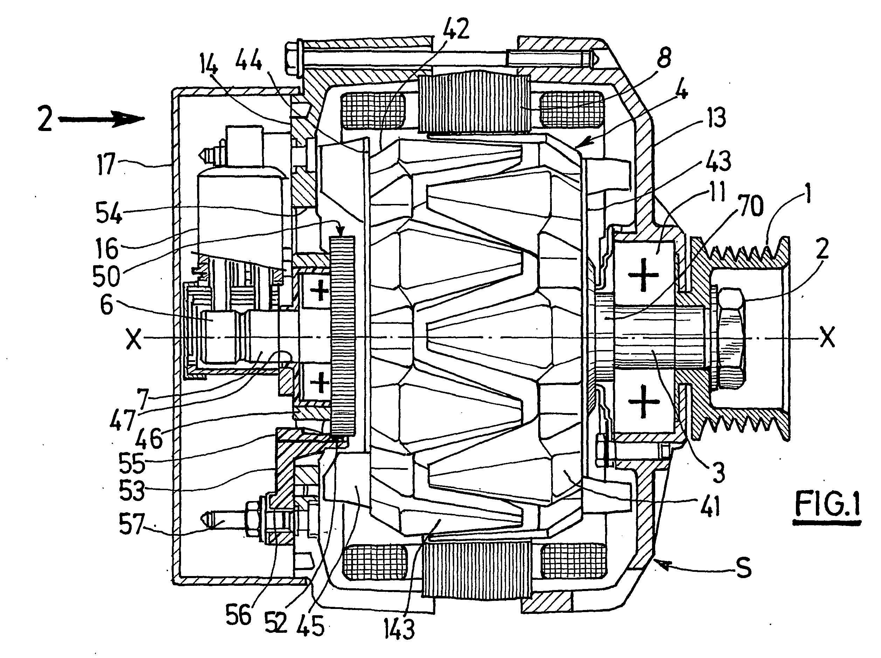

Dans les figures les éléments identiques ou similaires seront représentés par les mêmes signes de référence, l'avant de la machine correspondant à la droite de la figure 1 et l'arrière de la machine à la gauche de la figure 1.

L'alterno-démarreur comporte un organe 1 de transmission de mouvement appartenant à un dispositif de transmission de mouvement (non représenté) intervenant entre le moteur du véhicule et la machine.

La transmission de mouvement peut comporter des engrenages, des chaînes, des poulies à écartement variable, au moins une courroie.

De nombreuses variantes sont envisageables, l'organe 1 pouvant avoir donc de nombreuses configurations - engrenage, roue dentée, poulie etc. -.

L'organe 1 est un organe mené, lorsque la machine fonctionne en mode générateur de courant (alternateur), et un organe menant, lorsque la machine fonctionne comme un moteur électrique (démarreur), pour notamment démarreur le moteur du véhicule.

De manière simple et économique, la machine électrique tournante a ici la structure classique d'un alternateur triphasé pour véhicule automobile, en sorte que l'organe 1 consiste en une poulie intérieurement creuse et extérieurement rainurée pour la réception d'une courroie (non représentée) dotée de saillies en V et appartenant au dispositif de transmission de mouvement précité. Bien entendu en variante la machine comporte un nombre supérieur de phases.

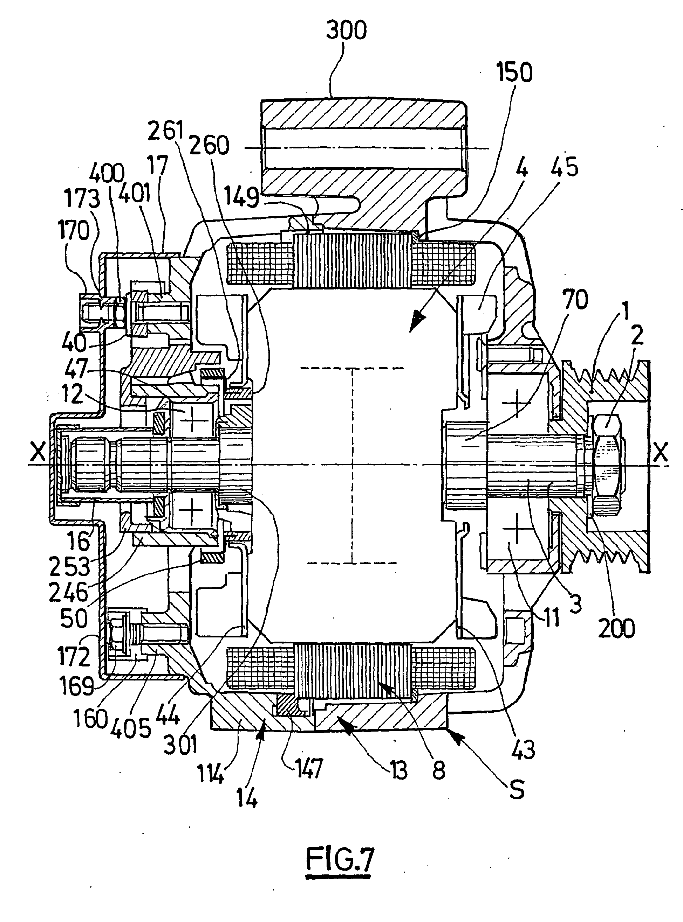

La poulie 1 présente un fond troué centralement et sert de logement à un écrou de fixation 2 et à une rondelle d'appui (référencée en 200 à la figure 7) intercalée entre l'écrou 2 et le fond de la poulie 1.

Ce fond, d'orientation transversale, est traversé centralement par l'extrémité filetée d'un arbre 3 tournant, dont l'axe de symétrie axiale X-X définit l'axe de rotation de la machine.

Par commodité, l'extrémité filetée de l'arbre 3 sera dite extrémité avant, tandis que son autre extrémité sera dite extrémité arrière.

L'arbre 3 porte à fixation un rotor 4 à griffes pourvu d'un bobinage d'excitation 5 dont les extrémités sont reliées par des liaisons filaires à deux pistes collectrices 6,7, en forme de bague, portées par l'extrémité arrière de l'arbre 3. Le rotor 4 bobiné constitue l'inducteur associé aux deux bagues 6,7 par lesquelles le courant d'excitation est amené via deux balais reliés à un dispositif régulateur de tension protégeant notamment la batterie du véhicule automobile.

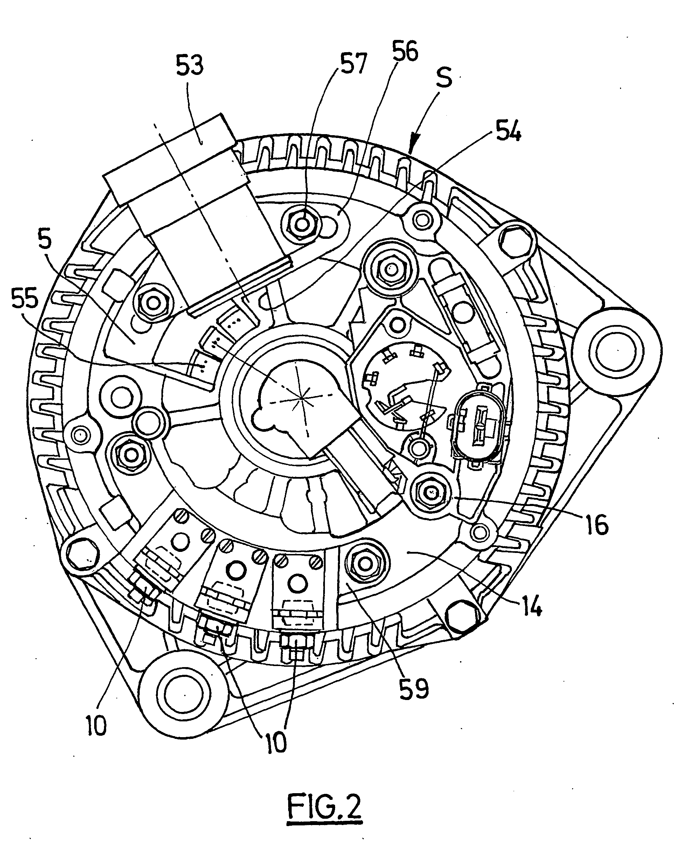

Le rotor 4 d'excitation est entouré par un stator bobiné 8 doté ici de trois enroulements pour définition de trois phases, dont on voit en 10 à la figure 2 les sorties. Le stator 8 constitue un induit.

Un entrefer existe entre la périphérie externe du rotor 4 et la périphérie interne du stator 8.

De manière connue le stator 8 comporte un paquet de tôles dotées intérieurement d'encoches pour définir une pluralité de rainures axiales de logement des fils des enroulements, dont on voit à la figure 1 les chignons (non référencés) s'étendant en saillie axiale de part et d'autre du paquet de tôles du stator 8. Des pôles existent entre les rainures. Un ou plusieurs enroulements peuvent être prévus par phase de la machine.

Tout ceci est bien connu de l'homme du métier.

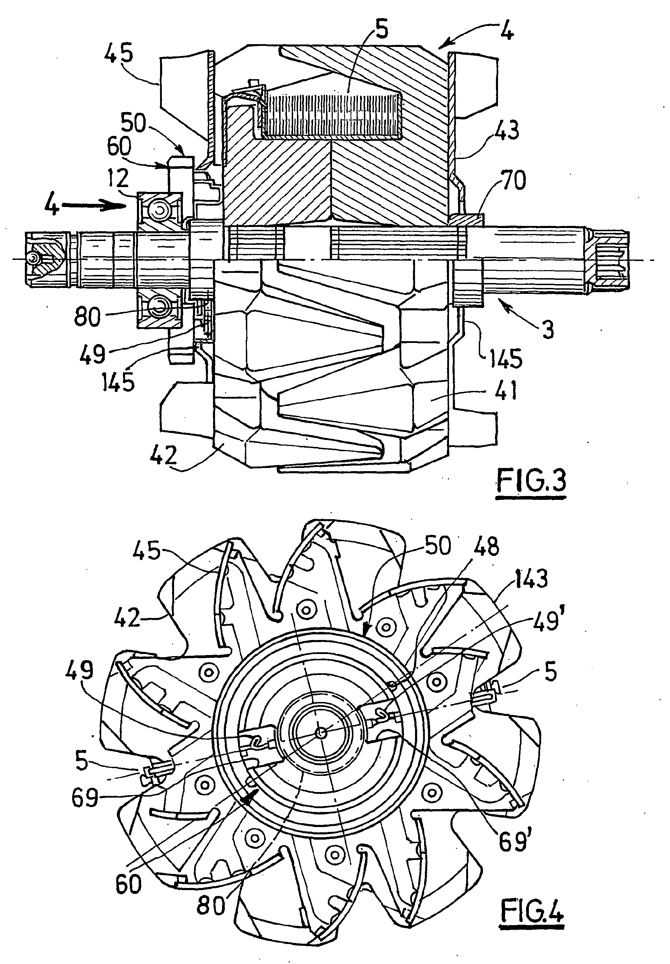

Il en est de même de la constitution du rotor 4, qui comporte deux roues polaires à griffes 41,42 fixées sur l'arbre 3 à la faveur de portions molletées, que présente localement l'arbre à cet effet (figure 3). Ces roues présentent chacune un flasque transversal portant à sa périphérie externe des dents d'orientation axiale 143 dirigées vers l'autre flasque.

Les dents 143 sont sensiblement parallèles à l'axe du rotor 4. Les dents 143 d'une roue polaire sont décalées angulairement par rapport aux dents de l'autre roue polaire de manière à ce que les dents des deux roues polaires s'entre-pénètrent en étant donc imbriquées les unes avec les autres.

Le bobinage 5 du rotor 4 étant alimenté en courant continu, les dents de l'une des roues polaires définissent des pôles nord, tandis que les dents de l'autre roue polaire définissent des pôles Sud. On magnétise ainsi le rotor 4 d'excitation.

Il y a alors création de paires de pôles nord-sud. En mode générateur électrique le défilement des dents devant les pôles du stator, par la rotation du rotor, crée dans le bobinage du stator un courant alternatif. Ce courant est redressé par un pont.

Le bobinage 5 est monté dans un support en forme de bobine (non référencée) de forme annulaire et présentant en section une forme de U. Pour le montage de la bobine et de son bobinage, chaque roue polaire 41,42 présente un manchon annulaire à sa périphérie interne. Les manchons sont dirigés l'un vers l'autre. Les dents 143 d'une roue polaire sont séparées les unes des autres par des échancrures. En vue de dessus, les dents ont une forme trapézoïdale.

En variante, comme décrit dans le brevet US 5,747,913, des aimants permanents peuvent être implantés au niveau des dents 143 qui, dans tous les cas, entourent le bobinage 5.

Les roues 41,42 sont trouées pour le passage à force de l'arbre 3. Plus précisément, l'arbre 3 est plus dur que les roues 41,42 pour fixation de celles-ci par ses portions molletées.

Cet arbre 3 s'étend de part et d'autre du rotor 4 et forme un sous-ensemble avec celui-ci.

Les roues polaires, par l'intermédiaire de leur flasque, portent à fixation, ici par soudage électrique, chacune un ventilateur 43,44 avec des pales 45.

En variante le ventilateur avant 43 est supprimé, ce ventilateur 43 étant moins puissant que le ventilateur arrière 44.

L'arbre 3, par son extrémité avant, traverse un roulement avant 11, tandis que par son extrémité arrière il traverse un roulement arrière 12 de plus petite taille que le roulement 11.

L'arbre 3 est emmanché à force dans les bagues internes des roulements 11 et 12, dont les bagues externes sont solidaires respectivement d'un premier support 13 et d'un second support 14. Ces supports 13,14 sont dénommés de manière usuelle respectivement palier avant 13 et palier arrière 14. Ils sont en matière moulable, ici à base d'aluminium. Ces supports 13,14 sont ajourés comme mieux visible dans les figures 1 et 7 pour autoriser une circulation d'air amplifiée par les ventilateurs 43,44 et refroidir la machine.

Ils ont une forme creuse et présentent chacun un fond troué centralement pour passage de l'arbre 3, ledit fond étant d'orientation transversale et présentant centralement un logement épaulé pour le montage et le calage axial dans un sens de la bague externe respectivement du roulement 11 et du roulement 12 portés ainsi à fixation. La bague externe du roulement 11 est emmanchée à force dans le logement du palier avant 13.

A leur périphérie externe les fonds, formant des voiles, des paliers portent chacun un rebord annulaire d'orientation axiale. Les rebords sont dirigés axialement l'un vers l'autre et sont fixés l'un avec l'autre par une pluralité de vis (non référencées) ici en forme de tirants comme visible à la figure 1. La longueur des rebords dépend des applications.

Les rebords sont intérieurement étagés en diamètre et présentent donc chacun intérieurement à leur extrémité libre une portion d'extrémité de plus grand diamètre interne et délimitée axialement par un épaulement formé à la faveur du changement de diamètre interne dudit rebord. Un espace existe ici entre les deux rebords. En variante les rebords sont jointifs. A la figure 1 le stator 8 est emmanché à force dans les extrémités libres des rebords en étant calé axialement par les épaulements desdits rebords ; les vis de fixation des rebords permettent donc également de serrer le stator 8 faisant à la figure 1 entretoise entre les deux rebords des paliers 13,14. A la figure 7 les rebords sont jointifs.

Le palier avant 13 porte des oreilles pour sa fixation à une partie fixe du véhicule et tendre la courroie. L'une de ces oreilles, en l'occurrence une oreille de fixation à une partie fixe du véhicule automobile, est visible en 300 à la figure 7.

En variante chaque palier 13,14, au moins au niveau de son rebord périphérique, présente dans son épaisseur un canal de circulation de fluide pour refroidir la machine en sorte que la présence des ventilateurs n'est pas indispensable, néanmoins les fonds des paliers demeurent ajourés.

En variante l'un des deux paliers est dépourvu de rebord et forme un couvercle pour l'autre palier doté en variante intérieurement d'un canal de circulation de fluide.

Le ou les canaux de refroidissement peuvent être branchés sur le circuit de refroidissement du véhicule.

Bien entendu on peut combiner ce type de refroidissement avec la présence d'un ou de deux ventilateurs à action axiale solidaire(s) en rotation du rotor comme décrit par exemple dans le document FR01 01526 déposé le 5 février 2001.

Toutes les combinaisons sont envisageables. Dans tous les cas les paliers 13,14 reliés ensemble appartiennent à un support creux S doté d'un palier avant 13 et d'un palier arrière 14 reliés entre eux et possédant chacun centralement un moyen de palier 11,12 tel qu'un roulement à billes, traversé par l'arbre 3.

Il ressort de ce qui précède, en allant axialement de la droite à la gauche de la figure 1, que la machine présente un arbre 3 à extrémité filetée pour montage de la poulie 1, un palier avant 13 avec son roulement central 11 pour montage rotatif de l'extrémité avant de l'arbre 3, une rondelle (non référencée) pour maintien axial dans l'autre sens de la bague externe du roulement 11, une rondelle entretoise 70, le stator 8 entourant le rotor 4, une cible 50 portée par un porte-cible (décrit ci-après), le palier arrière 14 avec son roulement central 12 pour montage rotatif de l'extrémité arrière de l'arbre 3, un porte-balais 16 fixé sur la face arrière du palier arrière 14 tournée à l'opposé du rotor 4 et un capot 17 fixé également sur la face arrière du palier arrière 14.

Les ventilateurs 43,44 sont portés par les faces des roues polaires 41,42 tournées vers les fonds des paliers 13,14.

On notera que la poulie 1 comporte à l'arrière une douille (non référencée) pour contact avec la bague interne du roulement 11 et que l'écrou 2 permet de serrer la poulie 1 au contact de la bague interne du roulement 11. Cette bague interne est serrée entre la douille de la poulie et l'entretoise en forme de bague.

En pratique le roulement 12 est porté par l'arbre 3, ainsi que la bague entretoise fixée sur l'arbre 3 à la faveur d'un molletage dudit arbre.

Ici le palier arrière 14 présente un logement annulaire délimité par une paroi d'orientation transversale et une douille 46 d'orientation axiale. Il en est de même du logement du palier avant. Les douilles sont ici intérieurement usinées.

Dans ce logement est montée une bague en matière plastique 47 rapportée par encliquetage dans celui-ci comme mieux visible à la figure 7. Ainsi la bague 47 présente à son extrémité avant des saillies engagées dans des évidements de la douille. La bague externe du roulement 12 est montée dans ce logement sans être retenue axialement.

Dans un alternateur classique une rondelle entretoise est montée entre le ventilateur arrière 44 et la bague interne du roulement 12.

Ici on remplace cette bague par une pièce porte-cible 60 portant à fixation une cible 50 à lecture axiale ou radiale. La cible est ici magnétique et comporte par exemple une alternance de pôles sud et nord répartis de manière régulière.

Le porte-cible 60 est ici une pièce en tôle emboutie en sorte qu'il est de nature magnétique.

En variante le porte-cible 60 est une pièce en matière plastique moulée et est alors de nature non magnétique.

Le porte-cible 60 est adjacent au fond du palier arrière 14 et est calé en rotation sur le rotor 4. Ce calage est réalisé de préférence par une liaison à coopération de formes.

A la figure 1 le porte-cible est calé en rotation de manière indirecte sur le rotor à l'aide du ventilateur 44 fixé ici sur la roue polaire 42. Cette disposition permet de ne pas modifier le rotor.

Le ventilateur 44 n'est également pas modifié car il présente de manière standard deux échancrures 48 à sa périphérie interne formant détrompeur pour fixer angulairement dans la bonne position le ventilateur par rapport aux dents 143 de la roue polaire 42 associée.

Le ventilateur 44 est en tôle emboutie et présente à sa périphérie externe les pales 45 et à sa périphérie interne un rebord transversal 145 décalé axialement en direction du roulement 12.

C'est dans ce rebord que sont formées les échancrures 48.

A la figure 4 on voit les liaisons filaires avec les extrémités du bobinage 5. Ces liaisons sont diamétralement opposées et traversent chacune un évidemment entre deux dents de la roue polaire 42.

Ensuite cette liaison passe entre la flasque de la roue polaire 42, évidée localement à cet effet, et le ventilateur 44 pour se terminer par une portion rectiligne engagée dans une boucle respectivement 49,49' appartenant à un dispositif de connexion 80 avec les pistes 6,7.

Les extrémités des liaisons filaires du bobinage 5 sont soudées ici électriquement avec les boucles 49,49', le dispositif 80 comprenant un bloc d'isolation électrique 61.

Le porte-cible 60 est de forme annulaire creuse. Il présente à sa périphérie externe un rebord annulaire 62,63 externe d'orientation axiale et étagé en diamètre. La portion de plus grand diamètre 63 s'étend en partie radialement au-dessus de la douille 46, tournée vers le rotor 4, du palier arrière 14 et donc également de la bague externe du roulement.

Dans la portion de plus petit diamètre 62 sont formés en saillie radiale par emboutissage deux ergots 64 diamétralement opposés pénétrant chacun de manière complémentaire dans une échancrure 48, ici semi-circulaire.

Les ergots 64 sont d'orientation axiale et de forme semi-circulaire en section. La longueur axiale des ergots 64 permet de s'affranchir des tolérances de fabrication.

La portion se raccorde à un fond 65 étagé globalement d'orientation transversale.

Le fond 65 se raccorde à sa périphérie externe à la portion 62 et à sa périphérie interne à un rebord annulaire interne 66 d'orientation axiale étagé en diamètre comme le rebord externe. Les rebords externe et interne sont donc en forme de douille étagée.

Le rebord 66 est plus court axialement que le rebord externe 62,63. Chaque rebord 62,63 et 66 présente à son extrémité libre une collerette de rigidification respectivement 67 et 68 dirigée respectivement radialement vers l'extérieur et radialement vers l'intérieur. La collerette 68 est destinée à venir en appui contre la bague interne du roulement 12, tandis que la collerette 67 est adjacente au fond du palier arrière 14, un jeu existant.

La portion 62 et le fond étagé 65 traversent le rebord transversal 145 du ventilateur 44 de forme annulaire et troué centralement. Le fond est apte à venir en appui sur le rotor 4.

Le porte-cible 60 forme une entretoise axiale entre le rotor 4 et la bague interne du roulement 12 en sorte qu'il est calé axialement à jeu de montage et ne risque pas d'interférer avec le palier 14, la longueur du rebord externe 62,63 étant déterminée en conséquence et dépendant des applications.

Des fenêtres opposées 69,69' affectent le fond 65 du porte-cible. Ces fenêtres permettent un accès aux boucles 49,49' et donc autorisent un soudage avec les extrémités du bobinage 5.

Le fond 65 est donc également un fond de protection lors de l'opération de soudage au niveau des boucles 49,49'.

La cible 50 comporte ici un nombre de paires de pôles magnétiques identiques à celui du rotor 4.

La nature du matériau constituant la cible peut être des ferrites, des terres rares ou ne comporter que des secteurs inertes en tôle magnétique fluxés par le champ magnétique du rotor.

Face à la cible 50 sont implantés ici trois capteurs 52 car la machine est du type triphasé, en variante plus de trois capteurs, portés par un porte-capteur 53 fixé sur le fond du palier arrière 14 plus précisément sur la face de celui-ci tournée à l'opposé de la cible 50 et du porte-cible 60.

La cible magnétique 50 est fixée sur la portion 63 de plus grand diamètre du porte-cible 60 et est à son extrémité libre adjacente au fond du palier arrière 14.

Les capteurs 52 sont de nature magnétique. Ce sont dans un premier mode de réalisation des capteurs à effet Hall, en variante des capteurs magnéto-résistifs dont la résistance varie en fonction du flux magnétique.

Les capteurs 52 sont implantés radialement au-dessus de la cible 50 avec définition d'un entrefer entre les capteurs et la cible en sorte que la lecture est radiale. Ainsi qu'on l'aura compris l'ensemble cible 50 - capteur 52 constitue un moyen de suivi de la rotation du rotor du type magnétique, qui ne risque pas de s'encrasser du fait d'une part de la ventilation crée par le ventilateur 44.

Cette ventilation est due au fait que les paliers 13 et 14 sont ajourés au niveau de leur fond et de leur rebord.

A la figure 1 on a repéré en 54 les trous réalisés dans le fond du palier arrière 14.

Le porte-capteurs 53, ici en matière plastique, présente des portions 55 d'orientation axiale. Ces portions 55 traversent le palier 14 à la faveur ici d'un trou 54. Les capteurs 52 sont solidaires des portions 55 et sont implantés radialement entre la cible 50 et les pales 45 en étant très proches de la cible 50.

Les connexions électriques des capteurs 52 sont logées dans le porte-capteurs 53 fixé à l'aide de deux oreilles 56 sur le fond du palier arrière 14 du côté opposé à la cible 50 et au rotor 4.

Les trous des oreilles 56 sont de forme oblongue pour passage de boulons de fixation 57 au fond du palier 14.

De même le porte-balais 16 est fixé sur la même face du fond du palier 14 à l'aide de boulons et d'oreilles non référencés.

Le porte-balais 16 comporte de manière connue deux cages pour le guidage de balais coopérant chacun avec une bague collectrice 6,7 rapportée sur l'extrémité arrière de l'arbre 3 et connectée chacune à l'une des boucles 49,49'. Les balais sont soumis à l'action de ressorts logés dans les cages.

Les sorties 10 des phases du stator 8 sont solidaires d'une pièce 59 fixée également sur le palier arrière à l'aide d'oreilles et de boulons non référencés. Pour chaque phase 10 des connexions sont prévues.

A la figure 7 le porte-balais 16 et les sorties des phases appartiennent à une seule et même pièce.

A la figure 2 on voit la répartition circonférentielle des pièces 53,16,59 électriquement isolantes.

On notera que le porte-capteurs 53 est réglable circonférentiellement.

On occupe donc au mieux l'espace disponible en ayant une protection par le capot 17 et une bonne aération.

Ici le porte-capteurs 53 est réglable angulairement ou circonférentiellement et présente un appendice dirigé radialement vers l'intérieur pour porter les trois portions 55 et les trois capteurs 52, le trou 54 ayant une grande taille.

Plus précisément le trou de passage 54 des portions axiales 55 a une plus grande taille que les autres trous comme visible à la figure 2.

Avantageusement les portions 55 sont reliées entre elles pour former un unique secteur.

Bien entendu les extrémités des phases 10, et les pièces 16,58 sont connectables à un module électronique de commande et de contrôle comme décrit par exemple dans les documents FR-A-2 745 444 et EP-A-0260 176 auxquels on pourra se reporter pour plus de précisions. A la lumière de ces documents on voit que les capteurs, par exemple à effet Hall, sont dans un type de réalisation à seuils. Ce module est implanté à l'extérieur de la machine. En variante il peut être implanté sur les rebords des paliers 13,14.

Le module électronique comporte des interrupteurs tels que des transistors MOSFET et comportent des moyens de commande pour commander de manière synchrone les phases du stator par exemple à l'aide de signaux carrés, en variante sinusoïdaux ou de forme trapézoïdale.

Le module électronique de commande et de contrôle est une unité de gestion que comporte un calculateur et reçoit des informations provenant des capteurs. Cette unité comporte également les interrupteurs précités appartenant au pont redresseur relié aux différentes phases de l'induit et monté entre la masse et la borne positive de la batterie. Chaque interrupteur est associé en parallèle à une diode permettant de redresser le courant alternatif en courant continu lors du fonctionnement de la machine en générateur électrique. Le dispositif régulateur de tension est également monté dans ce module.

Pour plus de précisions on se reportera aux documents précités, les phases de la machine étant par exemple montées en étoile comme visible par exemple dans les figures 4 et 12 à 14 du document EP-A-0 260 176.

En résumé les interrupteurs branchés en parallèle avec les diodes du pont redresseur, sont commandées à partir d'un ensemble électronique, comprenant un calculateur, qui reçoit des informations sur la position angulaire du rotor via les capteurs.

Lorsque la machine fonctionne en mode moteur électrique on alimente de manière séquentielle les phases.

Pour plus de précisions on se reportera par exemple au document EP-A-0 260 176.

Les moyens de suivis de l'invention sont aptes à être reliés à ces moyens de commande pour faire travailler la machine en moteur électrique et faire démarrer le moteur du véhicule.

Bien entendu il est possible d'arrêter le moteur au feu rouge pour redémarrer ensuite et économiser du carburant, l'unité de gestion étant conformée en conséquence.

En variante la machine peut travailler en moteur auxiliaire lorsque le moteur du véhicule est à l'arrêt pour entraîner un accessoire.

Dans les figures la lecture de la cible magnétique 50 est une lecture radiale. En variante grâce au trou la lecture peut être axiale, les capteurs 52 étant implantés axialement en vis-à-vis de la cible 50 c'est-à-dire en regard de la tranche de celle-ci.

On appréciera qu'une lecture radiale est plus précise qu'une lecture axiale de la cible.

La cible 50 est ici fixée par collage sur la portion 63 du porte-cible. En variante elle peut être surmoulée sur le porte-cible 60. Cette cible 50 est protégée car elle est implantée entre les faces latérales en vis-à-vis du palier 14 et du rotor 4, lesdites faces appartenant respectivement au fond du palier 14 et au flasque de la roue polaire 42.

En variante le porte-cible 60 peut être implanté entre le fond du palier avant 13 et le flasque de la roue polaire 41 à la place de l'entretoise 70. Le porte-capteur 53 est alors fixé sur la face du palier 13, tournée à l'opposé du rotor.

En variante le rotor 4 peut comporter des pôles saillants à chacun desquels est associé un bobinage. Il peut comporter deux paires de roues polaires à bobinage d'excitation.

En variante le rotor peut comporter des aimants permanents et des bobinages distincts.

Le rotor peut donc avoir n'importe quelle forme.

De même on peut concevoir que les roulements 11 et 12 peuvent être remplacés par d'autres types de palier par exemple lisses.

Dans tous les cas l'ensemble cible - porte-cible appartient à l'ensemble rotor 4 - arbre 3 - roulement 12.

En variante on peut inverser les structures, le ventilateur 43 ou 44 comportant des saillies, telles que des ergots, engagées dans des évidements, tels que des échrancrures, réalisés dans le porte-cible.

Au moins une saillie est prévue, le nombre de saillies pouvant être supérieur à deux.

Ainsi qu'il ressort des dessins les étagements du porte-cible 60 sont dus à la présence des pièces environnantes pour occuper au mieux l'espace.

Bien entendu on peut surexciter le bobinage 5 du rotor 4 lorsque la machine fonctionne en moteur électrique (mode démarreur) pour maximiser le couple de démarrage de l'alterno-démarreur.

Cette surexcitation peut être réalisée également lorsque la machine fonctionne en générateur électrique (mode alternateur). L'accessoire entraîné lorsque la machine fonctionne en moteur auxiliaire peut être le compresseur du dispositif de climatisation ou une pompe d'assistance pour direction hydraulique assistée. Pour plus de précisions on se reportera au document FR01 01341 déposé le 31 janvier 2001, décrivant toutes les stratégies possibles.

Bien entendu comme décrit dans le document FR00 16738 déposé le 21 décembre 2000 la machine électrique tournante peut comporter plus de trois phases.

Chaque phase peut comporter plusieurs enroulements. Les éléments électriquement conducteurs peuvent consister en des barres avantageusement de section rectangulaires ; les entrées des phases étant reliées entre elle par une pièce de liaison en forme de barrette. Pour plus de précisons on se reportera à ce document.

La répartition des pôles magnétiques sur la cible peut ne pas être symétrique. En effet, lorsque le bobinage 5 du rotor 4 est activé cela crée un champ magnétique en sorte que cela influe sur les moyens de suivi du type magnétique de la rotation du rotor. La dissymétrique de la répartition des pôles magnétiques de la cible permet de rétablir une symétrique pour le déclenchement des capteurs à seuils.

Ainsi selon les applications les pôles magnétiques Nord ou Sud ont une étendue circonférentielle plus grande que les autres pôles magnétiques Sud ou Nord. Cette différence d'étendue circonférentielle des pôles dépend de l'excitation du bobinage 5.

Dans tous les cas la cible magnétique possède des pôles Nord et Sud dissymétriques.

Bien entendu la présente invention n'est pas limitée aux exemples de réalisation décrits.

Ainsi dans un mode de réalisation des moyens de centrage interviennent entre le porte-capteurs et son palier associé pour obtenir un entrefer précis entre la cible et les capteurs associés.

On obtient ainsi une lecture précise et des informations précises de la part des capteurs.

Le porte-capteurs est donc conformé pour venir en contact intime avec le palier concerné.

Dans une forme de réalisation le palier concerné présente centralement une douille, qui est prolongée pour coopérer avec un rebord d'orientation axiale issu du porte-capteurs.

Plus précisément dans le mode de réalisation de la figure 7 la douille référencée en 246 est prolongée vers l'arrière en direction du capot 17 à fond ajouré.

Le porte-capteurs 53 présente à l'arrière un rebord annulaire d'orientation axiale 253 pénétrant dans l'extrémité arrière de la douille 246. Le rebord 253 est donc dirigé axialement avec le roulement 12 supporté par la douille 246 avec interposition de la bague en matière plastique 47.

Le rebord 253 est en contact intime par sa périphérie externe avec la périphérie interne de la douille 246 avantageusement usinée au niveau de l'extrémité arrière de celle-ci.

Ici le rebord 253 est en contact local avec la périphérie interne de la douille 246 pour obtenir un centrage encore plus précis du porte capteurs 53.

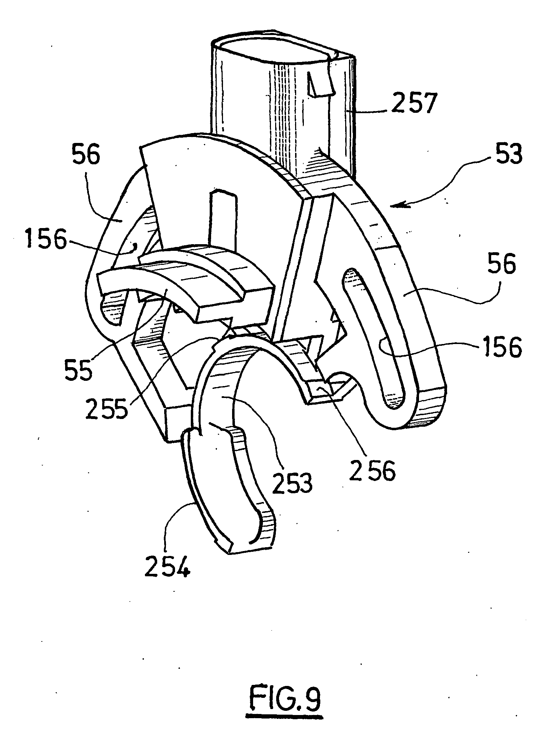

Ce porte capteurs 53 présente ici (figure 9) un rebord 253 s'étendant circonférentiellement sur moins de 360° avec trois zones saillantes 254,255,256 pour contact local avec l'extrémité arrière de la douille 246.

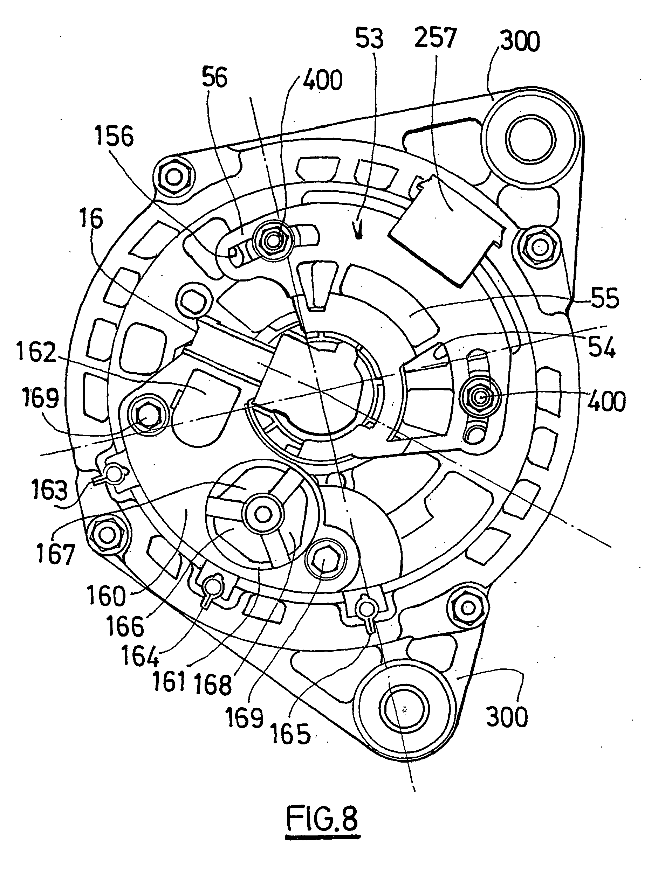

Ici le rebord 253 s'étend circonférentiellement sur plus de 180°. Tout cela dépend des applications et plus précisément de la présence du porte-balais 16 saillant radialement vers l'intérieur en direction de l'axe X-X comme mieux visible à figure 8.

Le rebord 253 est donc conformé circonférentiellement pour ne pas interférer avec le porte-balais 16, sachant que le porte-capteurs 253 est réglable angulairement ou circonférentiellement grâce aux oreilles 56 dotées chacune d'une ouverture de forme oblongue 156 permettant le réglage circonférentiel.

A la figure 9 le porte capteurs 53 est en matière plastique moulable comme à la figure 2 et les portions 55 appartiennent ici à un même secteur angulaire 55 traversant l'ouverture 54 réalisée dans le fond du palier arrière.

Cette ouverture est circonférentiellement plus étendue que le secteur 55, dans lequel sont noyés les capteurs.

Les capteurs 55 sont implantés radialement au-dessus de la cible magnétique 50 avec définition d'un entrefer précis, grâce à la douille 246 et aux portions 254 à 256, entre la périphérie externe de la cible 50 et la périphérie interne du secteur angulaire 55, la cible étant ici à lecture radiale.

D'une manière générale on obtient une plus grande précision avec une cible à lecture radiale qu'avec une cible à lecture axiale.

Le porte-capteurs présente à sa périphérie externe un connecteur 257 traversant le rebord annulaire d'orientation axiale du capot 17, doté à cet effet d'une ouverture de forme oblongue. Le porte-capteurs 53 est doté de trous de part et d'autre du secteur 55 comme visible dans les figures 8 et 9. Les trous s'étendent en-dessous des ouvertures 156.

Ce porte-capteurs 53 a une forme non symétrique à sa périphérie interne pour ne pas interférer avec le porte-balais 16 et occuper circonférentiellement au mieux l'espace disponible.

Ici le porte-balais 16 est du type de celui décrit dans la demande de brevet FR01 00931 déposée le 24 janvier 2001.

Ainsi le porte-balais 16 appartient à un support 160 doté d'un premier sous-ensemble 161 appartenant à un connecteur pour réaliser un raccordement électrique via un deuxième sous-ensemble, des câbles électriques et un deuxième connecteur avec le module électronique de commande et de contrôle comportant un boîtier renfermant les composants dudit module.

Les capteurs du porte-capteurs sont reliés via le connecteur 257 et un autre dispositif de connexion non visible au module électronique de commande et de contrôle.

Le porte-balais 16 comporte également un connecteur 162 pour liaison des balais au module électronique de commande et de contrôle via un troisième dispositif de connexion.

Le support 160 est donc en matière électriquement isolante.

Dans ce support sont noyées les bandes de matière électriquement conductrices reliant les entrées des sorties 163 à 165 des phases du stator 8 aux premières portées de contact 166 à 168 du premier sous-ensemble 161. Ces portées appartiennent à une protubérance du support 160 comme décrit dans ce document FR01 00931, des bandes de matière séparant à isolation électrique les portées de contact les unes des autres, le deuxième du connecteur présente un carter délimité par un boîtier et un couvercle de fermeture. Ce carter renferme des seconds éléments électriquement conducteurs montés à flexion à l'intérieur du carter et présentant deux deuxièmes portées de contact homologues aux portées 166 à 168 comme décrit dans le document FR01 00931 précité auquel on se reportera pour plus de précisions, le support 160 étant fixé au palier arrière par des vis 169 à la faveur de plots du palier arrière 14 et de colonnes issues du support 160.

Grâce aux dégagements que présente le porte-capteurs 53 au niveau du porte-balais 16, aux oreilles 56 et au rebord 253, on peut régler circonférentiellement le porte-capteurs 53 sans risque d'interférence avec le support 160. Dans tous les cas le porte-capteurs présente des ouvertures oblongues pour sa fixation à réglage angulaire sur le palier concerné ici à l'aide d'organe de fixation de manière décrite ci-après.

On appréciera que l'on occupe au mieux la place disponible au niveau du palier arrière 14, les trous du porte-capteurs 53 et du palier arrière favorisant la ventilation.

On notera que le stator 8 est monté élastiquement dans le support S comme décrit dans la demande FR00 13527 déposée le 6 octobre 2000.

Plus précisément quatre tampons 147 à pattes 148 de positionnement sont mis en place radialement entre le stator 8 et le rebord périphérique externe d'orientation axiale 114 du palier arrière 14.

Les tampons sont répartis ici circonférentiellement de manière régulière.

Ces tampons à section en forme d'équerre interviennent axialement et radialement entre le rebord 114 précité du palier 14 et l'extrémité arrière du paquet de tôles du stator 8 constituant le corps de celui-ci.

Pour ce faire le rebord 114 présente des logements 115 de réception des pattes 148 de positionnement des tampons 147.

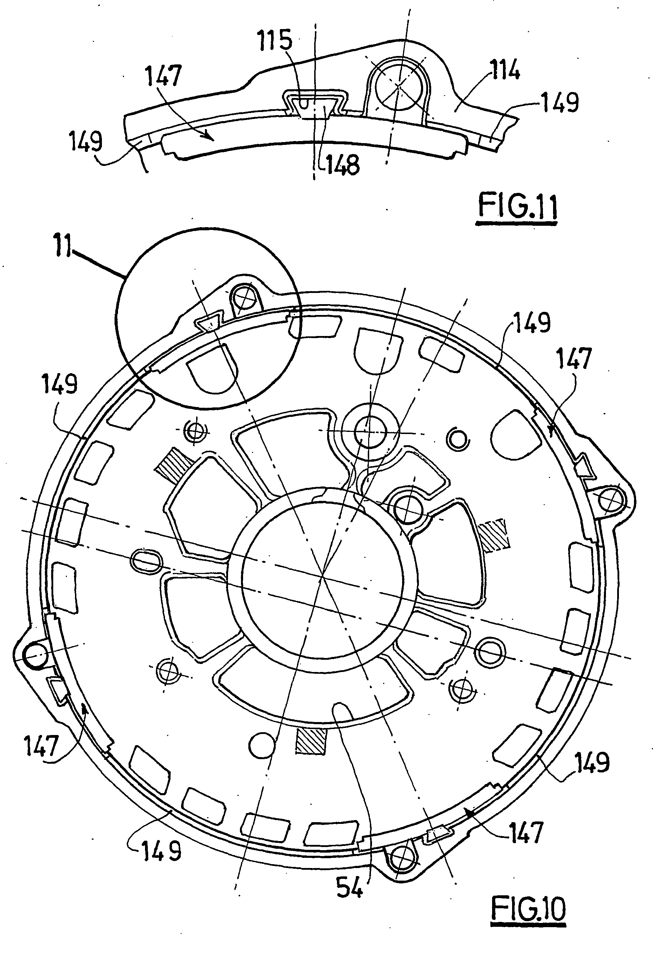

Les logements 115 ont une forme en queue d'aronde complémentaire à celle des pattes. L'extrémité libre du rebord 114 présente des dépouilles mieux visibles à la figure 11. Une résine thermoconductrice déformable élastiquement est interposée radialement entre le corps du stator 8 et le rebord 114. Plus précisément circonférentiellement des secteurs déformables élastiquement en résine thermoconductrice 149 alternent circonférentiellement de manière régulière avec les tampons 147 en étant interposés radialement entre le rebord 114 périphérique externe du palier arrière 14 et le corps du stator.

Un joint annulaire plat 150 déformable élastiquement s'interpose axialement entre le palier avant 13 et l'extrémité avant du corps du stator 8 comme mieux visible à la figure 7.

On notera que le rebord périphérique externe annulaire d'orientation axiale 113, que présente le palier avant, porte les pattes 300.

Les extrémités libres des rebords 113,114 sont entaillées en sorte que les rebords 113,114 sont étagés intérieurement en diamètre avec formation d'épaulements transversaux pour appui des tampons 147 et de la rondelle 150.

Ainsi on obtient un découplage mécanique et vibratoire du stator 8 par rapport au palier arrière 14 portant le porte-capteurs 53, tout en ayant, grâce aux secteurs 149, une bonne évacuation de la chaleur.

Les vibrations du porte-capteurs 53 sont donc réduites ainsi que la transmission de chaleur en sorte que le porte-capteurs 53 en matière plastique est ménagé et que la précision de lecture des moyens de suivi de la rotation du rotor est améliorée.

Grâce aux secteurs 149, le porte-cible 60 peut être en deux parties et comporter comme visible à la figure 7 une bague épaulée 260 en matière plastique calée axialement sur l'arbre 3 à la faveur d'un changement de diamètre 301 de celui-ci. Cette bague comporte un fond ajouré, globalement d'orientation tranversale, prolongé à sa périphérie externe par un rebord annulaire d'orientation axiale dans lequel est ancrée une pièce métallique 261 en forme de marche d'escalier portant la cible magnétique 50.

Le rebord de la bague 260 est surmoulé sur la base d'orientation axiale de la pièce 261, dont la portion sommitale d'orientation axiale porte la cible 50 et est raccordée à ladite base par une partie d'orientation transversale.

La base et la portion sommitale sont décalées axialement l'une par rapport à l'autre.

Le rebord de la bague 260 a globalement un diamètre moyen identique à celui de la douille 246. Ici le diamètre moyen dudit rebord est légèrement inférieur à celui de la douille 246 et la portion sommitale de la pièce 261 s'étend radialement au-dessus de la douille (figure 7).

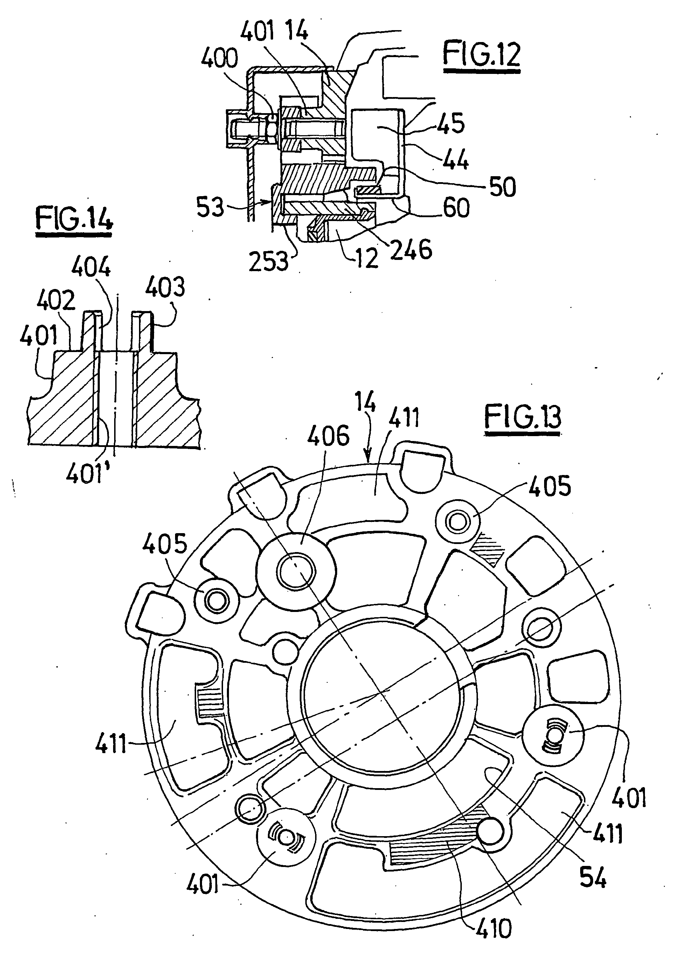

En variante (figure 12) le porte-cible est d'un seul tenant avec le ventilateur en formant un manchon 60 d'orientation axiale à la périphérie interne du ventilateur solidaire, par exemple par soudage par points du rotor 4.

On notera que le porte-balais 16 présente à sa périphérie interne un tube ouvert localement pour passage des balais, un joint (non référencé) étant interposé entre l'extrémité avant du tube interne du porte-balais et la bague 47 comme visible à la figure 7.

Ici le palier arrière 14 présente des plots 401,405,406 pour respectivement appui du porte-capteurs 53 et du support 160 sur le palier arrière. Les plots 401 et 405 sont taraudés intérieurement tandis que le plot 406 présente un perçage étagé intérieurement en diamètre pour logement de la tête et passage de la partie d'une vis de fixation traversant centralement le premier sous-ensemble du connecteur et notamment les premières portées 166 à 168 de celui-ci pour la fixation du deuxième sous-ensemble du connecteur comme mieux visible à la figure 2 du document FR01 00931 précité.

La vis présente donc un moletage au voisinage de sa tête pour fixation de la vis au plot 406.

Un écrou s'appuie via une rondelle sur le couvercle du deuxième sous-ensemble du connecteur en étant vissé sur la partie filetée de la tige.

Les plots 405 sont taraudés intérieurement pour recevoir les vis 169 de fixation du support 160 au palier arrière 14.

Les plots 401 sont destinés à recevoir des goujons 400 comportant deux parties filetées disposées de part et d'autre d'un écrou destiné à venir en appui sur l'oreille 56 concernée du porte-capteurs 253 avec interposition d'une rondelle d'appui 407 entre l'écrou du goujon 400 et l'oreille 56. Chaque goujon 400 traverse par sa partie filetée avant l'ouverture oblongue 156 ; la rondelle 407 étant plus large que l'ouverture 156 pour bloquer le porte-capteurs 53 suite au vissage des goujons 400.

C'est pour cette raison que le plot 401 est taraudé intérieurement en 401' pour recevoir la partie filetée avant des goujons 400.

La partie filetée arrière de chaque goujon 400 est encliquetée dans le capot 17 comportant à l'arrière des cheminées 170 d'orientation axiale transversale du capot 17.

Chaque cheminée 170 présente, à sa base de raccordement au fond transversal 172, une saillie annulaire 173, éventuellement fractionnée, destinée à venir en prise avec la partie filetée arrière du goujon 400 concerné.

Ainsi le capot 17 est monté par encliquetage sur les goujons 400, ses saillies 173 venant en prise avec les filetages arrières des goujons 400, sachant que le capot 17 est en matière plastique. Chaque plot 401 présente, comme les autres plots, une face supérieure 402 pour appui du porte-capteurs 53, plus précisément des oreilles 56 de celui-ci.

Suivant une caractéristique deux murets 403 sont issus en saillie axiale de la face 402, ici par moulage. Ces murets constituent une saillie creuse et délimitent intérieurement un trou 404 destiné chacun à recevoir la partie filetée avant du goujon concerné. Une fente sépare entre eux les murets.

Le trou 404 a le même axe de symétrie axiale que la partie taraudée 401' du plot 401. Ce trou 404 prolonge la partie taraudée 401' en étant de diamètre interne supérieur à celui de la partie taraudée 401'. Toutes ces dispositions favorisent le montage automatique des goujons 400.

En effet on engage avec ceux-ci dans les trous 404 en sorte qu'ils sont prépositionnés et ne risquent pas de basculer. Ensuite on visse les goujons à l'aide d'une visseuse.

On appréciera que les bords latéraux des murets 403 sont globalement rectilignes comme mieux visible à la figure 13, ce qui permet de réaliser un guidage des oreilles 56, les murets pénétrant dans les ouvertures oblongues 156, avantageusement sans faire saillie axialement au-delà des oreilles. Les murets 403 sont globalement en forme d'arc de cercle en étant donc logés dans l'épaisseur des oreilles 56. Les murets sont centrés sur l'axe des trous taraudés 401'.Les bords latéraux rectilignes des murets permettent de réduire l'encombrement diamétral des murets et donc de ne pas agrandir les ouvertures 156.

Bien entendu ce type de montage à plots dotés de murets est applicable à n'importe quelle pièce au support d'un ou de plusieurs composants portés par le palier 14.Ce type de montage peut s'appliquer au support 59 de la figure 1, les ouvertures étant alors circulaires et les organes de fixation des vis.

Les murets DE LA FIGURE 14 autorisent un réglage circonférentiel du porte-capteurs et épousent la forme des extrémités circonférentielles des ouvertures oblongues 156. En variante les murets sont reliés entre eux pour former une douille.

Le palier arrière présente ici des creux 411 sur sa face arrière pour son allégement.

On notera que les pattes 148 sont adjacentes circonférentiellement aux trous taraudés prévus pour les vis ou tirants de fixation des paliers 13,14 entre eux.

Une portée d'appui 410 pour le porte-capteurs 53 est prévue entre l'un des creux 411 et le trou 54, de plus grande étendue circonférentielle, que les autres trous, du palier 14. L'implantation des moyens de suivi à l'arrière de la machine est favorable pour des connexions.

Bien entendu le carter du connecteur précité participe à la fixation du capot 17, en association avec les cheminées 170.

En variante le centrage du porte-capteurs est réalisé à l'aide d'un pion issu du porte-capteurs et engagé dans une lumière du palier arrière, le pion coopérant avec les bords circonférentiels de la rainure. Des moyens de centrage existent donc avantageusement entre le porte-capteurs et son palier associé.

## Revendications

1. Machine électrique tournante polyphasée du type réversible apte à être utilisée dans un véhicule automobile à moteur à combustion interne, d'une part, comme générateur électrique et, d'autre part, comme moteur électrique pour le démarrage du moteur à combustion interne, comportant un arbre (3) portant un rotor (4) à pôles magnétiques entouré par un stator (8) polyphasé porté intérieurement par un support creux (S) doté d'un palier avant (13) et d'un palier arrière (14) reliés entre eux et possédant chacun centralement un moyen de palier (11,12) traversé par l'extrémité de l'arbre (3) portant le rotor (4), dans lequel :
- des moyens de suivi (50,52) du type magnétique de la rotation du rotor (4) sont prévus et comportent au moins un capteur (52) associé à une cible (50) et monté sur un porte-capteur(s) (53) implanté du côté de la face du premier palier (14) tournée à l'opposée du rotor (4),
- le porte-capteur(s) (53) est réglable ou fixe angulairement,
- la cible (50) est une cible à lecture axiale ou radiale,
- la cible (50) est fixée sur un porte-cible (60) calé en rotation sur le rotor (4) et est implantée axialement entre le rotor (4) et l'un des paliers avant (13) ou arrière (14), dit premier palier, adjacent au porte-cible (60),
- le premier palier (14) adjacent au porte-cible (60) porte le ou les capteurs (52) détectant le passage de la cible magnétique (50) et
- le ou les capteurs (52) pénètrent au moins dans une ouverture (54) que présente le premier palier (14) pour lecture de la cible magnétique (50).

2. Machine électrique selon la revendication 1, **caractérisée en ce que** la cible est une cible magnétique et comporte un nombre de paires de pôles magnétiques identique à celui du rotor (4).

3. Machine électrique selon la revendication 1 ou 2, **caractérisée en ce que** le capteur (52) est un capteur à effet Hall.

4. Machine électrique selon la revendication 1 ou 2, **caractérisée en ce que** le capteur (52) est un capteur magnéto-résistif.

5. Machine électrique selon l'une quelconque des revendications précédentes, **caractérisée en ce que** l'ouverture (54) du premier palier(14) consiste en un trou de passage (54), **en ce qu'**au moins trois capteurs (52) sont prévus, **en ce que** le porte-capteur (53) présente des portions d'orientation axiale (55) traversant le premier palier (14) à la faveur du trou de passage (54) du premier palier (14) et **en ce que** les capteurs (52) sont solidaires des portions axiales (55).

6. Machine selon la revendication 5, **caractérisée en ce que en ce que** les capteurs (52) sont implantés radialement entre la cible (50) et les pales (45) d'un ventilateur (44) solidaire du rotor (4) et **en ce que** les portions d'orientation axiale (55) sont reliées entre elles pour former un unique secteur.

7. Machine électrique selon l'une quelconque des revendications précédentes, **caractérisée en ce que** le ou les capteurs (52) sont montés sur un porte-capteur(s) (53) fixé sur le premier palier (14) du côté de celui-ci opposé au rotor (4).

8. Machine électrique selon la revendication 7, **caractérisé en ce que** le porte-capteur(s) (53) présente des oreilles (56) avec des ouvertures oblongues (156) pour sa fixation à réglage angulaire sur ledit palier.

9. Machine électrique selon l'une quelconque des revendications précédentes, **caractérisé en ce que** le porte-cible (60) est lié en rotation de manière directe ou indirecte au rotor (4) par coopération de formes au rotor (4).

10. Machine électrique selon la revendication 9, **caractérisé en ce que** le porte-cible est lié par coopération de formes à un ventilateur (44) fixé sur le rotor (4).

11. Machine électrique selon la revendication 10, **caractérisée en ce que** le ventilateur (44) présente au moins une échancrure (48) à sa périphérie interne dans laquelle pénètre de manière complémentaire un ergot (64) issu du porte-cible (60).

12. Machine électrique selon la revendication 11, **caractérisée en ce que** le porte-cible (60) présente à sa périphérie externe un rebord annulaire externe (62,63) d'orientation axiale et à sa périphérie interne un rebord annulaire interne (66) d'orientation axiale plus court axialement que le rebord externe (62,63).

13. Machine électrique selon la revendication 12, **caractérisée en ce que** le rebord externe (62,63) est étagé en diamètre et comporte une portion de plus grand diamètre (63) sur laquelle et fixée la cible (50), par exemple par collage, et une portion de plus petit diamètre (62) sur laquelle est formé en saillie radiale l'ergot (64).

14. Machine électrique selon la revendication 13, **caractérisée en ce que** le rebord interne (66) est étagé en diamètre et est conformé pour présenter à son extrémité libre une collerette (68) dirigée radialement vers l'intérieur pour venir en appui contre la bague interne d'un roulement (12) constituant le moyen de palier du premier palier (14) adjacent à la cible (50).

15. Machine électrique selon la revendication 14, **caractérisé en ce qu'**un fond étagé (65) relie entre eux les rebords externe (62,63) et interne (66) et **en ce que** le fond étagé (65) comporte des fenêtres (69,69').

16. Machine électrique selon l'une quelconque des revendications 1 à 8, **caractérisé en ce que** le porte-cible est d'un seul tenant avec un ventilateur (44) fixé sur le rotor.

17. Machine électrique selon l'une quelconque des revendications précédentes, **caractérisé en ce que** le premier palier (14) est le palier arrière (14) et **en ce que** la cible (50) et son porte-cible (60) sont adjacents au palier arrière (14).

18. Machine selon la revendication 17, **caractérisée en ce qu'**un capot arrière (17) est monté sur le palier arrière (14) pour protéger les moyens de suivi (50, 52) du type magnétique de la rotation du rotor (4) et un porte-balais (16) que comporte la machine électrique.

19. Machine électrique selon l'une quelconque des revendications précédentes, **caractérisé en ce que** la cible comporte des ferrites ou des terres rares.

20. Machine électrique selon l'une quelconque des revendications précédentes, **caractérisé en ce que** la cible comporte des pôles magnétiques répartis de manière non symétriques.

21. Machine électrique selon l'une quelconque des revendications précédentes, **caractérisé en ce que** des moyens de centrage existent entre le porte-capteurs (53) et son palier (14) associé.

22. Machine électrique selon la revendication 21, **caractérisé en ce que** le palier (14) associé au porte-capteurs (53) présente une douille (246) pour montage du moyen de palier (11,12) et **en ce que** le porte-capteurs (53) présente un rebord (253) d'orientation axiale pour contact intime avec la périphérie interne de la douille (246).

23. Machine électrique selon la revendication 22, **caractérisé en ce que** ledit rebord (253) est interrompu.

## Claims

1. Polyphase electric rotary machine of the reversible type capable of being used in a motor vehicle with an internal combustion engine, on the one hand, as an electric generator and, on the other hand, as an electric motor for starting the internal combustion engine, comprising a shaft (3) supporting a rotor (4) with magnetic poles surrounded by a polyphase stator (8) supported internally by a hollow support (S) furnished with a front bearing (13) and a rear bearing (14) connected together and each having centrally a bearing means (11, 12) traversed by the end of the shaft (3) supporting the rotor (4), in which:
- monitoring means (50, 52) of the magnetic type for monitoring the rotation of the rotor (4) are provided and comprise at least one sensor (52) associated with a target (50) and mounted on a sensor holder (53) implanted on the side of the face of the first bearing (14) turned away from the rotor (4),
- the sensor holder (53) can be angularly adjusted or fixed,
- the target (50) is an axial or radial read target,
- the target (50) is fixed to a target holder (60) that is immobilized in rotation on the rotor (4) and is implanted axially between the rotor (4) and one of the front (13) or rear (14) bearings, called the first bearing, adjacent to the target holder (60),
- the first bearing (14) adjacent to the target holder (60) supports the sensor(s) (52) detecting the passage of the magnetic target (50) and
- the sensor(s) (52) enter(s) at least an opening (54) that the first bearing (14) has for reading the magnetic target (50).

2. Electric machine according to Claim 1, **characterized in that** the target is a magnetic target and comprises a number of pairs of magnetic poles that is identical to that of the rotor (4).

3. Electric machine according to Claim 1 or 2, **characterized in that** the sensor (52) is a Hall effect sensor.

4. Electric machine according to Claim 1 or 2, **characterized in that** the sensor (52) is a magnetoresistive sensor.

5. Electric machine according to any one of the preceding claims, **characterized in that** the opening (54) of the first bearing (14) consists of a through-hole (54), **in that** at least three sensors (52) are provided, **in that** the sensor holder (53) has portions (55) of axial orientation traversing the first bearing (14) in favour of the through-hole (54) of the first bearing (14) and **in that** the sensors (52) are secured to the axial portions (55).

6. Machine according to Claim 5, **characterized in that** the sensors (52) are implanted radially between the target (50) and the blades (45) of a fan (44) secured to the rotor (4) and **in that** the portions (55) of axial orientation are connected together to form a single sector.

7. Electric machine according to any one of the preceding claims, **characterized in that** the sensor(s) (52) is (are) mounted on a sensor holder (53) fixed to the first bearing (14) on the side of the latter away from the rotor (4).

8. Electric machine according to Claim 7, **characterized in that** the sensor holder (53) has lugs (56) with oblong openings (156) for its angularly adjustable attachment to the said bearing.

9. Electric machine according to any one of the preceding claims, **characterized in that** the target holder (60) is directly or indirectly linked in rotation to the rotor (4), by interaction of shapes to the rotor (4).

10. Electric machine according to Claim 9, **characterized in that** the target holder is linked by interaction of shapes to a fan (44) fixed to the rotor (4).

11. Electric machine according to Claim 10, **characterized in that** the fan (44) has at least one notch (48) on its inner periphery into which a protrusion (64) from the target holder (60) enters in a complementary manner.

12. Electric machine according to Claim 11, **characterized in that** the target holder (60) has on its outer periphery an outer annular rim (62, 63) of axial orientation and on its inner periphery an inner annular rim (66) of axial orientation that is axially shorter than the outer rim (62, 63).

13. Electric machine according to Claim 12, **characterized in that** the outer rim (62, 63) is tiered in diameter and comprises a portion (63) of larger diameter to which the target (50) is fixed, for example by bonding, and a portion of smaller diameter (62) on which the protrusion (64) is formed protruding radially.

14. Electric machine according to Claim 13, **characterized in that** the inner rim (66) is tiered in diameter and is formed to have at its free end a collar (68) directed radially inwards in order to rest against the inner race of a rolling element (12) forming the bearing means of the first bearing (14) adjacent to the target (50).

15. Electric machine according to Claim 14, **characterized in that** a tiered bottom (65) connects the outer rims (62, 63) and inner rim (66) and **in that** the tiered bottom (65) comprises windows (69, 69').

16. Electric machine according to any one of Claims 1 to 8, **characterized in that** the target holder is in a single piece with a fan (44) fixed to the rotor.

17. Electric machine according to any one of the preceding claims, **characterized in that** the first bearing (14) is the rear bearing (14) and **in that** the target (50) and its target holder (60) are adjacent to the rear bearing (14).

18. Machine according to Claim 17, **characterized in that** a rear cover (17) is mounted on the rear bearing (14) in order to protect the monitoring means (50, 52) of the magnetic type for monitoring the rotation of the rotor (4) and a brush holder (16) that the electric machine comprises.

19. Electric machine according to any one of the preceding claims, **characterized in that** the target comprises ferrites or rare earths.

20. Electric machine according to any one of the preceding claims, **characterized in that** the target comprises magnetic poles distributed dissymmetrically.

21. Electric machine according to any one of the preceding claims, **characterized in that** there are centring means between the sensor holder (53) and its associated bearing (14).

22. Electric machine according to Claim 21, **characterized in that** the bearing (14) associated with the sensor holder (53) has a socket (246) for mounting the bearing means (11, 12) and **in that** the sensor holder (53) has a rim (253) of axial orientation for close contact with the inner periphery of the socket (246).

23. Electric machine according to Claim 22, **characterized in that** the said rim (253) is noncontinuous.

## Patentansprüche

1. Mehrphasige drehende elektrische Maschine des reversiblen Typs, die in einem Kraftfahrzeug mit Brennkraftmaschine einerseits als elektrischer Generator und andererseits als Elektromotor zum Anlassen der Brennkraftmaschine verwendet werden kann, mit einer Welle (3), die einen Rotor (4) mit Magnetpolen trägt, der von einem mehrphasigen Stator (8) umgeben ist, der innen von einem hohlen Träger (S) getragen wird, der mit einem vorderen Lager (13) und mit einem hinteren Lager (14) versehen ist, die miteinander verbunden sind und jeweils mittig ein Lagermittel (11, 12) besitzen, durch das das Ende der Welle (3), die den Rotor (4) trägt, verläuft, wobei:
- Folgermittel (50, 52) des magnetischen Typs für die Drehung des Rotors (4) vorgesehen sind und wenigstens einen Sensor (52) tragen, der einem Ziel (50) zugeordnet ist und an einem Sensorträger (53) montiert ist, der auf Seiten der Fläche des ersten Lagers (14), das vom Rotor (4) abgewandt ist, eingebaut ist,
- der Sensorträger (53) in Winkelrichtung einstellbar oder fest ist,
- das Ziel (50) ein axiales oder radiales Leseziel ist,
- das Ziel (50) an einem Zielträger (60) befestigt ist, der am Rotor (4) drehfest vorgesehen ist und axial zwischen den Rotor (4) und das vordere Lager (13) oder das hintere Lager (14), das erstes Lager benachbart zu dem Zielträger (60) genannt wird, eingebaut ist,
- wobei das erste Lager (14) benachbart zu dem Zielträger (60) den oder die Sensoren (52) trägt, die die Vorbeibewegung des magnetischen Ziels (50) detektieren, und
- der oder die Sensoren (52) wenigstens in eine Öffnung (54) eindringen, die das erste Lager (14) aufweist, um das magnetische Ziel (50) zu lesen.

2. Elektrische Maschine nach Anspruch 1, **dadurch gekennzeichnet, dass** das Ziel ein magnetisches Ziel ist und eine Anzahl von Paaren von Magnetpolen, die mit jener des Rotors (4) identisch ist, enthält.

3. Elektrische Maschine nach Anspruch 1 oder 2, **dadurch gekennzeichnet, dass** der Sensor (52) ein Hall-Effekt-Sensor ist.

4. Elektrische Maschine nach Anspruch 1 oder 2, **dadurch gekennzeichnet, dass** der Sensor (52) ein magnetoresistiver Sensor ist.

5. Elektrische Maschine nach einem der vorhergehenden Ansprüche, **dadurch gekennzeichnet, dass** die Öffnung (54) des ersten Lagers (14) aus einem Durchgangsloch (54) besteht, dass wenigstens drei Sensoren (52) vorgesehen sind, dass der Sensorträger (53) Abschnitte (55) mit axialer Orientierung aufweist, die durch das erste Lager (14) erleichtert durch das Durchgangsloch (54) des ersten Lagers (14) verlaufen und dass die Sensoren (52) mit den axialen Abschnitten (55) fest verbunden sind.

6. Maschine nach Anspruch 5, **dadurch gekennzeichnet, dass** die Sensoren (52) radial zwischen dem Ziel (50) und den Blättern (45) eines mit dem Rotor (4) fest verbundenen Ventilators (44) eingebaut sind und dass die Abschnitte (55) mit axialer Orientierung miteinander verbunden sind, um einen einzigen Sektor zu bilden.

7. Elektrische Maschine nach einem der vorhergehenden Ansprüche, **dadurch gekennzeichnet, dass** der oder die Sensoren (52) an einem Sensorträger (53) montiert sind, der an dem ersten Lager (14) auf jener Seite desselben, die sich gegenüber dem Rotor (4) befindet, befestigt ist.

8. Elektrische Maschine nach Anspruch 7, **dadurch gekennzeichnet, dass** der Sensorträger (53) Ösen (56) mit länglichen Öffnungen (156) für seine in Winkelrichtung einstellbare Befestigung an dem Lager aufweist.

9. Elektrische Maschine nach einem der vorhergehenden Ansprüche, **dadurch gekennzeichnet, dass** der Zielträger (60) direkt oder indirekt mit dem Rotor (4) durch Zusammenwirkung von Formen am Rotor (4) drehbar verbunden ist.

10. Elektrische Maschine nach Anspruch 9, **dadurch gekennzeichnet, dass** der Zielträger durch Zusammenwirkung von Formen mit einem am Rotor (4) befestigten Ventilator (44) verbunden ist.

11. Elektrische Maschine nach Anspruch 10, **dadurch gekennzeichnet, dass** der Ventilator (44) an seinem inneren Umfang wenigstens einen Einschnitt (48) aufweist, in den ein vom Zielträger (60) vorstehender Zapfen (64) komplementär eindringt.

12. Elektrische Maschine nach Anspruch 11, **dadurch gekennzeichnet, dass** der Zielträger (60) an seinem äußeren Umfang einen äußeren ringförmigen Rand (62, 63) mit axialer Orientierung und an seinem inneren Umfang einen inneren ringförmigen Rand (66) mit axialer Orientierung, der axial kürzer als der äußere Rand (62, 63) ist, aufweist.

13. Elektrische Maschine nach Anspruch 12, **dadurch gekennzeichnet, dass** der äußere Rand (62, 63) einen gestuften Durchmesser aufweist und einen Abschnitt mit größerem Durchmesser (63), an dem das Ziel (50) beispielsweise durch Kleben befestigt ist, und einen Abschnitt mit kleinerem Durchmesser (62), an dem ein radial vorstehender Zapfen (64) ausgebildet ist, umfasst.

14. Elektrische Maschine nach Anspruch 13, **dadurch gekennzeichnet, dass** der innere Rand (66) einen gestuften Durchmesser aufweist und so angepasst ist, dass er an seinem freien Ende einen Kranz (68) aufweist, der radial zum Innenraum gerichtet ist, um sich an dem Innenring eines Wälzlagers (12) abzustützen, das das Lagermittel des ersten Lagers (14) benachbart zu dem Ziel (50) bildet.

15. Elektrische Maschine nach Anspruch 14, **dadurch gekennzeichnet, dass** ein gestufter Boden (65) den äußeren Rand (62, 63) und den inneren Rand (66) miteinander verbindet und dass der gestufte Boden (65) Fenster (69, 69') aufweist.

16. Elektrische Maschine nach einem der Ansprüche 1 bis 8, **dadurch gekennzeichnet, dass** der Zielträger einteilig mit einem am Rotor befestigten Ventilator (44) ausgebildet ist.

17. Elektrische Maschine nach einem der vorhergehenden Ansprüche, **dadurch gekennzeichnet, dass** das erste Lager (14) das hintere Lager (14) ist und dass das Ziel (50) und sein Zielträger (60) zu dem hinteren Lager (14) benachbart sind.

18. Maschine nach Anspruch 17, **dadurch gekennzeichnet, dass** an dem hinteren Lager (14) eine hintere Haube (17) angebracht ist, um die Folgermittel (50, 52) des magnetischen Typs für die Drehung des Rotors (4) und einen Kontaktbürstenträger (16), den die elektrische Maschine aufweist, zu schützen.

19. Elektrische Maschine nach einem der vorhergehenden Ansprüche, **dadurch gekennzeichnet, dass** das Ziel Ferrite oder seltene Erden enthält.

20. Elektrische Maschine nach einem der vorhergehenden Ansprüche, **dadurch gekennzeichnet, dass** das Ziel nicht symmetrisch verteilte Magnetpole aufweist.

21. Elektrische Maschine nach einem der vorhergehenden Ansprüche, **dadurch gekennzeichnet, dass** zwischen dem Sensorträger (53) und seinem zugeordneten Lager (14) Zentriermittel vorhanden sind.

22. Elektrische Maschine nach Anspruch 21, **dadurch gekennzeichnet, dass** das Lager (14), das dem Sensorträger (53) zugeordnet ist, eine Hülse (246) aufweist, um das Lagermittel (11, 12) zu montieren, und dass der Sensorträger (53) eine Kante (253) mit axialer Orientierung aufweist, um mit dem inneren Umfang der Hülse (246) in engem Kontakt zu sein.

23. Elektrische Maschine nach Anspruch 22, **dadurch gekennzeichnet, dass** der Rand (253) unterbrochen ist.
